# EUROPÄISCHE PATENTSCHRIFT

(11) **EP 3 699 322 B1**
(45) Veröffentlichungstag und Bekanntmachung des Hinweises auf die Patenterteilung: **29.09.2021**
(21) Anmeldenummer: 19158862.3
(22) Anmeldetag: 22.02.2019
(51) Int. Cl.: C25B 1/04, C25B 9/01, C25B 11/02, C25B 15/08, F02B 43/10, F02M 21/02, F02M 25/12

(54) **ELEKTROLYSEZELLE**
ELECTROLYTIC CELL
CELLULE D'ÉLECTROLYSE

(43) Veröffentlichungstag der Anmeldung: 26.08.2020
(73) Patentinhaber: Glock Ökoenergie GmbH, 9112 Griffen (AT)
(72) Erfinder: Glock, Gaston, 9220 Velden (AT)
(74) Vertreter: Patentanwälte Barger, Piso & Partner

(56) Entgegenhaltungen:
- CN-U- 201 678 736
- US-A- 5 196 104
- US-A1- 2010 206 721
- US-A1- 2012 058 405

## Beschreibung

Die Erfindung betrifft eine Elektrolysezelle, insbesondere zur Verwendung in einem Kraftfahrzeug, zur elektrolytischen Zerlegung von Wasser, entsprechend dem Oberbegriff des Anspruches 1 und dem CN 2016 78736 U.

Die CN 2016 78736 U offenbart eine Elektrolysezelle zur Verwendung in einem Kraftfahrzeug, wobei flüssiges Wasser in gasförmigen Sauerstoff und Wasserstoff zerlegt wird, und die ausgeleiteten Gase zur Sicherheit gegen den Rückschlag einer Flamme durch ein eigenes Gefäß, einen "externen Gaswäscher", geleitet werden. Dieses externe Gefäß benötigt Platz und es müssen Leitungen von der eigentlichen Elektrolysezelle zum Gefäß vorgesehen werden.

Aus der US 2012/058405 A1 ist es bei einer akustisch aktivierten Elektrolysezelle bekannt, die Elektroden mit eigenen Abdeckungen zu versehen, um die gebildeten Gase abzuleiten und wohl auch, um Verwirbelungen in der Flüssigkeit zufolge der sonochemischen Aktivierung zu verhindern.

Aus der US 5,196,104 A ist es bekannt, bei einer mit Wasserstoff und Sauerstoff betriebenen Turbine die Gase aus Sicherheitsgründen durch einen umgekehrten Gasdücker zuzuführen.

Es bestehen seit langem Bestrebungen, den Wirkungsgrad von Verbrennungskraftmaschinen, insbesondere von Dieselmotoren, durch die Zugabe von Wasserstoff zu erhöhen, und dabei gleichzeitig die Emission schädlicher Abgase, insbesondere Stickoxiden, zu verringern. Da das Vorsehen und Mitführen eines ausreichend voluminösen Wasserstofftanks im Kraftfahrzeug, zufolge der Eigenschaften des unter hohem Druck stehenden oder gar verflüssigten Wasserstoffs aufwendig, und daher kostspielig, und darüber hinaus auch gefährlich ist, wurde schon verschiedentlich vorgeschlagen, den Wasserstoff während des Betriebs des Kraftfahrzeuges aus Wasser durch Elektrolyse zu gewinnen, wobei der dafür benötigte Strom vom Verbrennungsmotor über einen angeschlossenen Generator, bevorzugt die sowieso vorhandene Lichtmaschine, erzeugt wird

Ein gutes frühes, allgemeines Beispiel dafür liefert die US 5,272,871. Eine Elektrolysezelle, die zur Wasserstofferzeugung für die Benutzung in Verbrennungskraftmotoren verwendbar ist, ist aus der US 6,332,434 bekannt. Im Wesentlichen beschäftigt sich diese Druckschrift aber nicht mit dem Aufbau der Elektrolysezelle, sondern mit der Regelung, bzw. Steuerung, in Abhängigkeit vom Betriebszustand des Fahrzeuges.

Es besteht somit ein Bedarf an einer Elektrolysezelle, die an die Randbedingungen eines Kraftfahrzeugs angepasst ist, das heißt, dass sie in ihrer Form flexibel, prinzipiell aber kompakt und wenig Platz bedürfend ausgebildet ist, dass sie den mechanischen Beanspruchungen, denen sie während des Fahrens ausgesetzt ist, zuverlässig widersteht, und auch in dem großen Temperaturbereich, in dem sie eingesetzt wird, zuverlässig und mit hohem Wirkungsgrad arbeitet.

Es ist Ziel und Aufgabe der Erfindung, eine solche Elektrolysezelle anzugeben.

Erfindungsgemäß erreicht man diese Ziele durch eine Elektrolysezelle der eingangs definierten Art, die die im kennzeichnenden Teil Anspruches 1 angegebenen Merkmale aufweist. Mit anderen Worten, die Elektrolysezelle besteht aus zwei Teilzellen, eine die Anoden enthaltend, die andere die Kathoden, die plattenförmigen Elektroden haben den Umriss regelmäßiger Vierecke, Sechsecke, Achtecke oder, bevorzugt, eines Kreises, und werden von mindestens einer Haltestange mit Abstandhaltern zwischen den Elektroden gehalten, wobei diese Haltevorrichtung auch die elektrische Kontaktierung darstellt, wobei zumindest der gebildete Wasserstoff durch ein Umlenkrohr durch den Elektrolyten außerhalb der Teilzelle geleitet, geführt wird. Dies dient als Sicherheit für den Fall des Rückschlages einer Verbrennungsreaktion und erübrigt einen separaten Bubbler.

Die Erfindung wird im Folgenden anhand der Zeichnung näher erläutert. Dabei zeigt
die Fig. 1 ein Beispiel für die Anordnung einer Elektrolysezelle im Zusammenwirken mit einer Verbrennungskraftmaschine,
die Fig. 2 ein Beispiel für eine erfindungsgemäße Elektrolysezelle in einer Explosiondarstellung, und
die Fig. 3 in einer Art vertikalen Schnittansicht, bzw. durchsichtigen Ansicht, eine erfindungsgemäße Elektrolysezelle in Projektion auf Linie III-III der Fig. 4,
die Fig. 4 einen Schnitt entlang der Linie IV-IV der Fig. 3 und
die Fig. 5 in zwei Ansichten Varianten der Form der Elektroden.

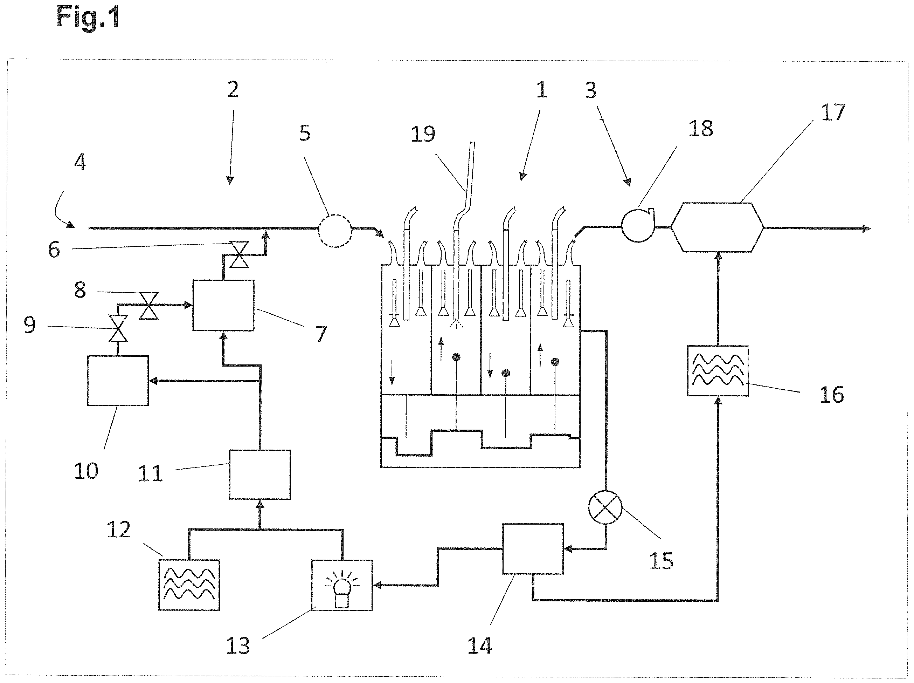

Wie aus **Fig. 1** ersichtlich ist, weist eine Verbrennungskraftmaschine 1 einen Ansaugtrakt 2 und einen Abgastrakt 3 auf. Dem Ansaugtrakt 2 wird Umgebungsluft 4 zugeführt, ein Turbolader 5 kann, muss aber nicht vorgesehen sein. In den Ansaugtrakt 2 mündet, gegebenenfalls vor dem Turbolader, eine Leitung mit Wasserstoff ein. Dabei können, ausgehend vom Ansaugtrakt 2, zuerst ein oder mehrere Rückschlagventile 6 vorgesehen sein, um das Eindringen von Luft, oder auch anderen Gasen, aus dem Ansaugtrakt 2 in die Wasserstoffversorgung 7 zu verhindern. In diese Wasserstoffversorgung 7 gelangt Wasserstoff, entweder von einer Elektrolysezelle 11 und/oder von einem Puffertank 10, letzterer ist mit der Wasserstoffversorgung 7 über einen Flussregler 8, und gegebenenfalls einen Druckminderer 9 verbunden. Der Puffertank 10 dient der Versorgung mit Wasserstoff beim Starten, sofern für diesen Betriebszustand nicht auf die Zumischung von Wasserstoff verzichtet wird.

Der Wasserstoff selbst stammt von der Elektrolysezelle 11, zu der ein Elektrolyttank 12 und eine Stromversorgung 13 gehört. Letztere kann z.B. eine Batterie sein, oder auch die Lichtmaschine des Kraftfahrzeugs. Eine Steuerungsvorrichtung, bzw. Regelvorrichtung 14, steuert in Abhängigkeit von den Daten eines Drehzahlmessers 15, gegebenenfalls der allgemeinen Elektronik des Motormanagements, die Stromversorgung 13 um die erforderliche Menge an Wasserstoff bereitzustellen. Die Regelungsvorrichtung 14 regelt unter anderem auch die Abgabe von Harnstoff aus einem Harnstofflösungstank 16 zum Katalysator 17, der im Abgastrakt hinter einer LambdaSonde 18 vorgesehen ist.

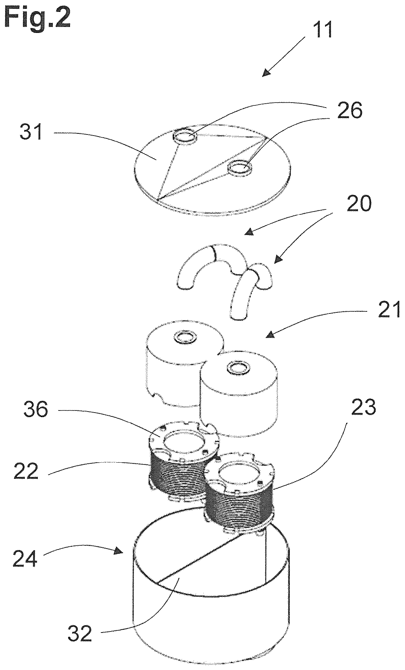

In **Fig. 2** ist nun die Elektrolysezelle 11 in einer Art Explosionsskizze näher dargestellt. Sie weist ein Elektrolytbecken 24 auf, das erfindungsgemäß auch als Bubblebecken verwendet wird, eine insgesamt als Kathode 22 bezeichnete Anordnung von Elektroden und eine bevorzugt gleichermaßen aufgebaute Anode 23. Diese sind in einer Elektrolysekammer 21 innerhalb des Elektrolysebeckens 24 untergebracht, am oberen Ende münden in zwei Auslässe der Abdeckung jeweils eine Gasleitung 20, durch die die gebildeten Gase nach Art eines umgekehrten Dükers in die Elektrolytflüssigkeit geleitet werden, das Elektrolysebecken 24 wird durch eine Abdeckplatte 31 mit jeweils einem Gasauslass 26 für den Sauerstoff und Wasserstoff geschlossen. Die Elektrolysekammer 21 ist mit dem Elektrolytbecken 24 über eine oder mehrere Austauschöffnungen 25 oder auch -leitungen derart verbunden, dass ein Elektrolytaustausch automatisch erfolgt.

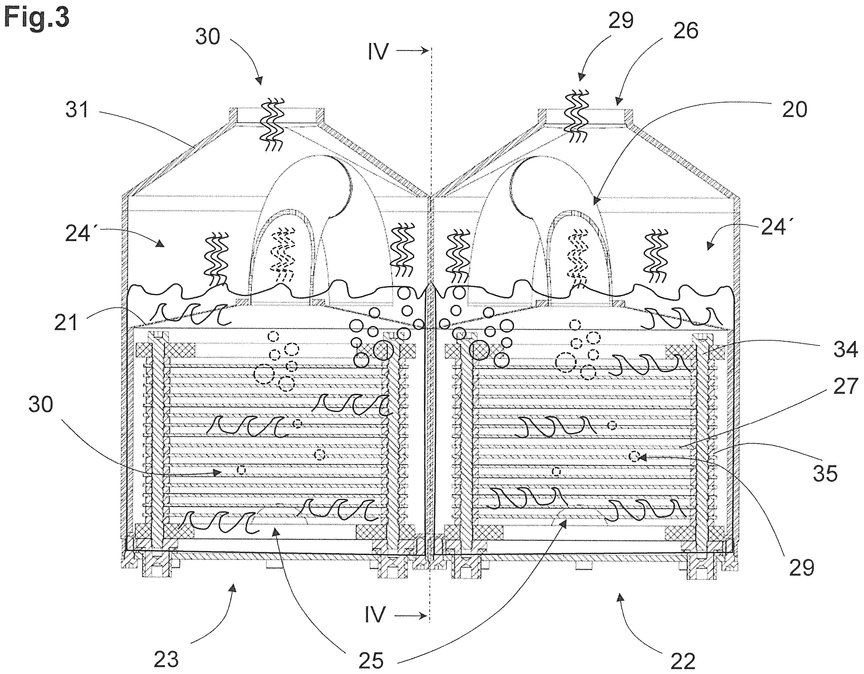

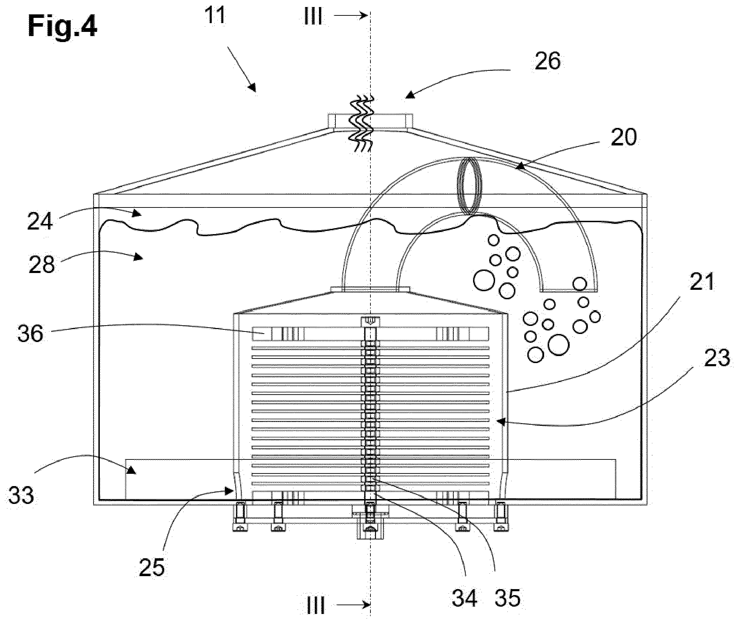

**Fig. 3** zeigt einen schematischen Schnitt entlang einer Vertikalebene durch die beiden parallelen Hochachsen der Kathode und Anode 22, 23, entlang der Linie III-III der **Fig. 4****,** diese wiederum ist eine Schnittdarstellung entlang der Linie IV-IV der Fig. 3: Das Elektrolytbecken 24, das durch eine Trennwand 32 in zwei Teil-Elektrolysekammern 24' geteilt ist, weist in seinem untersten Bereich (Fig. 4) zumindest eine Verbindung 33 auf, eine solche Verbindung kann auch durch eine sich unmittelbar unterhalb der Elektrolysezelle 11 geteilte Zufuhr für den Elektrolyten gebildet werden. Eine derartige Verbindung 33 kann als Verbindungsöffnung oder auch als Leitung ausgeführt werden. Die Kathode 22 besteht aus dünnen Blechplatten, die im gezeigten Ausführungsbeispiel Kreisform aufweisen und zwei Durchgangsöffnungen haben, durch die ein Zuganker 34 gesteckt ist, wobei der Abstand zwischen zwei benachbarten Elektrodenplatten durch einen ebenfalls am Zuganker 34 aufgefädelten Abstandhalter 35 definiert wird. Unterhalb der untersten und oberhalb der obersten Elektrodenplatte ist jeweils eine Isolatorplatte 36 vorgesehen, die ebenfalls entsprechende Öffnungen für die Zuganker aufweist.

Die elektrische Anbindung der Elektrodenplatten 27 über zumindest einen leitfähigen Zuganker 34 ist eine bevorzugte Möglichkeit der Kontaktierung, wobei eine elektrische Trennung des Elektrodenpotentials von der Elektrolysekammer 21, dem Elektrolytbecken 24 etc. im Ermessen des Fachmanns ausgeführt sein kann. Die Zuganker 34 weisen zumindest in ihren Endbereichen, mit denen sie über die Isolatorplatten 36 vorstehen, Gewinde auf, und durch Aufschrauben entsprechender Muttern werden die Elektrodenplatten 27 samt Abstandhalter 35 zusammengepresst, wodurch auch die elektrische Kontaktierung zuverlässig erfolgt, die Zuganker 34 und Abstandhalter 35 bestehen aus elektrisch leitendem Material.

Die Anode 23 ist völlig analog aufgebaut, bei der Elektrolyse von Wasser ist für beide Elektroden 22, 23 die Verwendung von Eisen, bevorzugt in Form von Stahl, problemlos möglich.

Jede der beiden Elektroden ist in einer Abdeckung 21 untergebracht, die grob gesagt, Glockenform hat: ein zylindrischer Mantel schließt mit einem konischen Oberteil ab, ein prismatischer Mantel mit einem Pyramidenstumpf, dadurch werden die gebildeten Gasblasen 29, 30 im Elektrolyten zum jeweiligen Zentrum der Abdeckung 21 geleitet, und gelangen von dort in etwa U-förmige Gasleitungen 20, natürlich getrennt voneinander, der Wasserstoff 29 und der Sauerstoff 30. Die Gasleitungen 20 sind dabei "verkehrt" montiert, sodass das "U" am Kopf steht.

In Fig. 4 ist die Anordnung der Gasleitung 20 gut zu sehen, das Volumsverhältnis zwischen Elektrolytbecken 24 und Elektrolysekammer bzw. Abdeckung 21 ist so nicht notwendig, es ist eine Folge des kreiszylindrischen Elektrolytbeckens 24 (Fig. 2) und kann durch dessen Änderung an den Anwendungsfall angepasst werden.

Statt des "U"s der Gasleitungen 20 kann auch eine Art Schirm mit zumindest teilweise ringförmigem (horizontalen) Schlitz, ein invertierter Düker (Gasdüker), oberhalb der Öffnungen in der glockenförmigen Abdeckung 21 vorgesehen sein, wesentlich ist nur, dass beim Wasserstoff 29 der Austritt der Gasblasen unter der Flüssigkeitsoberfläche des Elektrolyten erfolgt und dass diese Oberfläche (bei beiden Gasen) im Abstand vom Gasauslass 26 liegt. Die dafür nötige Steuerung bzw. Regelung der Elektrolytzufuhr ist dieselbe wie im Stand der Technik und bedarf hier keiner weiteren Erläuterung. Das Gleiche gilt für die Aufbereitung und eventuell Regeneration des Elektrolyten.

Im dargestellten Ausführungsbeispiel werden beide Gase mittels solcher U-förmiger Gasleitungen 20 unter der Oberfläche des Elektrolyten in der Elektrolytkammer 24 freigesetzt, unter gewissen Umständen ist dies beim Sauerstoff nicht notwendig, beim Wasserstoff hat es allerdings die Funktion eines sogenannten Bubblers. Dieser wird im Stand der Technik als eigenes Gefäß ausgebildet und häufig als Gaswäscher bezeichnet, hat aber mit Reinigung nichts zu tun, sondern dient als Sicherheitsmaßnahme im Falle des Rückschlages einer Flamme, als Schutz für die Elektrolysezelle 11.

Die gebildeten Gase treten nun aus dem Elektrolyten außerhalb der Abdeckung 21, aber innerhalb des Elektrolytbeckens 24 mit seiner Abdeckplatte 31 aus, und werden durch die beiden Gasauslässe 26 getrennt abgezogen und passend weitergeleitet.

Der Elektrolyt ist bei der Verwendung in KFZs so, wie dargestellt, in Bewegung und seine Oberfläche bildet Wellen aus, die im Vergleich zur Größe der Elektrolysezelle 11 als groß zu bezeichnen sind. Für das ordnungsgemäße Funktionieren der Elektrolysezelle 11 ist es notwendig und ausreichend, wenn der Flüssigkeitsspiegel des Elektrolyten stets über der Öffnung des Rohres 20 bzw. des Schlitzes des Gasdükers für den Wasserstoff liegt und so tief unter dem Gasauslass der Elektrolysezelle 11, dass keine merklichen Mengen des Elektrolyten vom austretenden Gas, insbesondere dem Wasserstoff, mitgerissen werden. Dazu ist noch festzuhalten, dass auch das Einbringen einer gewissen Menge Wassers in den Ansaugtrakt 2 und den Motor nicht schädlich ist. Der Elektrolyt, das Wasser, kann durch Zugabe von Zusätzen, die die Leitfähigkeit erhöhen und andere Eigenschaften passend verändern, wie im Stand der Technik bekannt, aufbereitet werden, diesbezüglich besteht beider erfindungsgemäßen Elektrolysezelle kein Unterschied zu bekannten.

Die Kathode 22 und die Anode 23 müssen nicht gleich ausgebildet sein, wenn dies auch aus Fertigungs- und Lagerhaltungsgründen vorteilhaft ist. Es ist nicht notwendig, dass die Elektrodenplatten 27 Kreisform aufweisen, wenn dies auch aus elektrotechnischen Gründen vorteilhaft ist. Wenn quadratische oder sechseckige Platten verwendet werden, wird jedweder Abfall an Plattenmaterial vermieden, dies ist insbesondere vorteilhaft, wenn, aus welchen Gründen auch immer, kostspieligere Platten als Stahlplatten verwendet werden. Es ist auch nicht notwendig, dass zwei Zuganker 34 vorgesehen sind, mit einem, der dann bevorzugt im Zentrum der Platten 27 angeordnet ist, kann das Auslangen gefunden werden, unter Umständen ist es auch günstig mehr als zwei Anker vorzusehen. In Kenntnis der Erfindung und des jeweiligen Anwendungsgebietes kann dies der Fachmann leicht entscheiden.

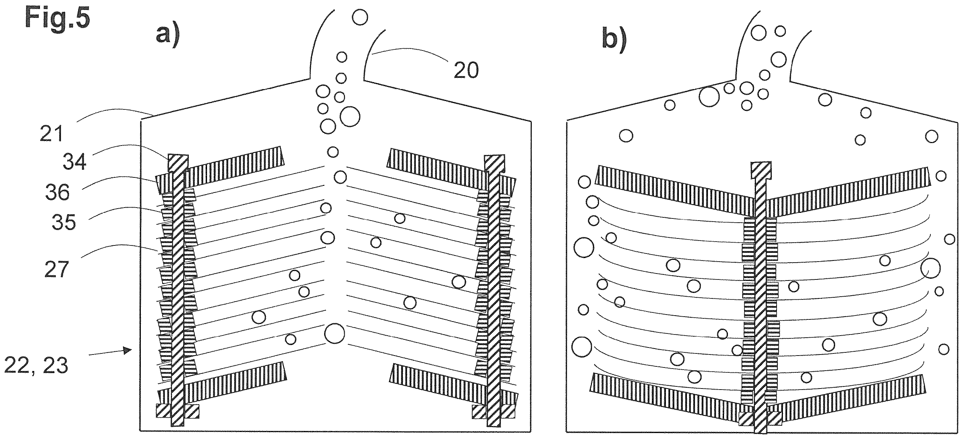

In Ausgestaltung der Erfindung ist es, wie in den **Figs. 5a und 5b** dargestellt, möglich, statt ebener Elektrodenplatten 27 leicht konische oder kalottenförmige Platten zu verwenden, siehe Fig. 5b, in solchen Fällen ist die Wahl, nur einen Zuganker 34 zu verwenden, besonders vorteilhaft. Statt der kalottenförmigen Ausbildung können auch konische Platten, ähnlich der dargestellten Isolatorplatte 36 verwendet werden. Die Fig. 5a zeigt konische kreisringförmige Elektrodenplatten mit zentraler Austrittsöffnung, was die Sammlung der Gasblasen im Bereich des Auslasses zur Gasleitung 20 verbessert. Die ringförmigen Platten werden bevorzugt von zumindest drei gleichmäßig über den Umfang verteilte Zuganker gehalten und kontaktiert, im dargestellten Ausführungsbeispiel sind es vier.

Durch eine solche geneigte Ausbildung und/oder das Vorsehen von Löchern in den Elektrodenplatten und gegebenenfalls auch den Isolatorplatten 36 kann das Ableiten der sich bildenden Gasblasen verbessert werden, wenn dies auch beim Anwendungsgebiet in Fahrzeugen, zufolge der unvermeidlichen Erschütterungen, keine so große Rolle spielt, wie beim stationären Betrieb. Erfindungsgemäß sind derartige Formen auch auf vieleckige Elektrodenplatten 27 analog übertragbar um den beschriebenen Effekt zu erzielen. Der Einfachheit halber wird auf eine detaillierte Darstellung der elektrischen Anbindung der Kathoden 22 bzw. Anoden 23 verzichtet, da diese vom Fachmann in an sich bekannter Weise vorgenommen werden kann.

Eine, besonders bei der Verwendung in Fahrzeugen und hier Kraftfahrzeugen, günstige Ausbildung ist die konische oder zeltartige Ausbildung der Abdeckplatte 31 für jedes Gas des Elektrolytbeckens 24, sodass die Gasauslässe 26 an der höchsten Stelle eines sich darunter ausbildenden Domes befinden. Diese Vorkehrung sichert auch bei Position des Fahrzeuges auf schrägen Untergrund einen ungestörten Gasaustritt und sorgt für eine zuverlässige Abscheidung von Tröpfchen des Elektrolyten.

In der Darstellung der Zeichnung wurde die Zuleitung des Elektrolyten und die elektrische Versorgung nicht speziell eingezeichnet, hier können alle aus dem Stand der Technik bekannten Möglichkeiten verwendet werden, durch die Anwendung bei einer erfindungsgemäßen Elektrolysevorrichtung ändert sich nichts an deren Anordnung und Auswahl.

Die Erfindung ist nicht auf die dargestellten und beschrieben Ausführungsbeispiele beschränkt, sondern kann verschiedentlich abgewandelt werden. So können die Elektrolysekammern verschieden ausgestaltet sein, es können Gasdüker und Gasleitungen 20 kombiniert werden, es können die Umrisse und die Höhen an die jeweilige Einbausituation angepasst werden. Es können auch Ergänzungen vorgenommen werden, so kann beispielsweise eine Zwischenkammer zum Abtrennen mitgerissenen Elektrolyten vorgesehen sein, oder es wird der Puffertank 10 zwingend durchströmt und dient auch diesem Zweck, und vieles mehr.

In der Beschreibung und den Ansprüchen werden die Begriffe "vorne", "hinten", "oben", "unten" und so weiter in der landläufigen Form und unter Bezugnahme auf den Gegenstand in seiner üblichen Gebrauchslage, gebraucht. Das heißt, dass das Gas ober der Flüssigkeit ist, dass "quer" zu einer Richtung eine im Wesentlichen um 90° dazu gedrehte Richtung meint, das ein Behälter mit seiner Bodenfläche am, Untergrund steht und ähnliches.

Es soll noch darauf hingewiesen werden, dass in der Beschreibung und den Ansprüchen Angaben wie "unterer Bereich" eines Behälters, Reaktors, Filters, Bauwerks, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe (Breite - Länge) meint. All diese Angaben haben ihre landläufige Bedeutung, angewandt auf die bestimmungsgemäße Position des betrachteten Gegenstandes.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus". Angaben wie "mehr als fünf" umfassen explizit jede natürliche Zahl größer als fünf.

### Bezugszeichenliste:

| | | | |
|---|---|---|---|
| 1 | VKM | 20 | Gasleitungen |
| 2 | Ansaugtrakt | 21 | Elektrolysekammer-Abdeckung |
| 3 | Abgastrakt | | |
| 4 | (Umgebungs-)Luft | 22 | Kathode |
| 5 | Turbolader | 23 | Anode |
| 6 | Rückschlagventil | 24 | Elektrolytbecken |
| 7 | H2-Versorgung | 25 | Elektrolytaustausch (-leitung/-öffnung) |
| 8 | Flussregler | | |
| 9 | Druckminderer | 26 | Gasauslass |
| 10 | H2-(Puffer-)Tank | 27 | Elektroden (-platten |
| 11 | Elektrolysezelle | 28 | Elektrolyt |
| 12 | H2O-/Elektrolyt-Tank | 29 | H2 |
| 13 | Stromversorgung | 30 | O2 |
| 14 | Steuerungs-Regelungsvorrichtung | 31 | Abdeckplatte |
| | | 32 | Trennwand |
| 15 | Drehzahlmesser | 33 | Verbindung (Öffnung oder Leitung) |
| 16 | Harnstofflösungstank | | |
| 17 | Katalysator | 34 | Zuganker |
| 18 | Lambdasonde | 35 | Abstandhalter |
| 19 | Kraftstoff-/Dieselzufuhr | 36 | Isolatorplatten |

## Patentansprüche

1. Elektrolysezelle (11), insbesondere zur Verwendung in einem Kraftfahrzeug, zur elektrolytischen Zerlegung von flüssigem Wasser in gasförmigen Wasserstoff (29) und Sauerstoff (30), mit einem Elektrolytbecken (24) in dem ein Elektrolyt (28) eingefüllt ist, mit einer Kathode (22) und einer Anode (23), die jeweils für sich in einer Abdeckung (21) angeordnet sind, **dadurch gekennzeichnet, dass** das Elektrolytbecken (24) durch eine Trennwand (32) in zwei Teil-Elektrolytbecken (24') geteilt ist, wobei im Bodenbereich eine Verbindung (33) vorgesehen ist, dass die beiden Abdeckungen (21) jeweils in einem der Teil-Elektrolytbecken (24') angeordnet sind, dass zumindest die Abdeckung (21) mit der Kathode (22) in ihrem obersten Bereich in einen umgekehrten Gasdüker führt, dass die Elektrolysezelle (11) eine Steuerungs- und Regelungseinheit für die Elektrolytzufuhr aufweist, die eingerichtet ist, die Auslassöffnung des Gasdückers im Elektrolytbecken (24) zur Gänze unterhalb des Flüssigkeitsspiegels des Elektrolyten zu halten, und dass das Elektrolytbecken (24) für jedes der Gase (29, 30) einen eigenen Gasauslass (26) aufweist, der im vertikalen Abstand oberhalb des Flüssigkeitsspiegels des Elektrolyten (28) angeordnet ist.

2. Elektrolysezelle (11) nach Anspruch 1, **dadurch gekennzeichnet, dass** die Abdeckung (21) die Form eines zylindrischen Mantels mit konischem Oberteil, oder eines prismatischem Mantel mit Pyramidenstumpf als Oberteil, aufweist.

3. Elektrolysezelle (11) nach einem der voranstehenden Ansprüche, **dadurch gekennzeichnet, dass** das Elektrolytbecken (24) unterhalb jedes seiner Auslässe (26) einen Dom ausbildet.

4. Elektrolysezelle (11) nach einem der vorhergehenden Ansprüche, **dadurch gekennzeichnet, dass** die Kathode (22) und die Anode (23) Elektrodenplatten (27) aufweisen, die quadratischen, regelmäßig sechseckigen, regelmäßig achteckigen oder kreisrunden Umriss aufweisen.

5. Elektrolysezelle (11) nach einem der Ansprüche 1 bis 3, **dadurch gekennzeichnet, dass** die Elektrodenplatten (27) kegelstumpfförmig oder kalottenförmig ausgebildet sind.

## Claims

1. Electrolytic cell (11), more particularly for use in a motor vehicle, for electrolytic decomposition liquid of water into gaseous hydrogen (29) and oxygen (30), comprising an electrolyte tank (24) in which an electrolyte (28) is filled, comprising a cathode (22) and an anode (23), which are each separately arranged in a cover (21), **characterized in that** the electrolyte tank (24) is divided by a partition (32) into two partial electrolyte tanks (24'), a connection (33) being provided in the bottom region, **in that** the two covers (21) are each arranged in one of the partial electrolyte tanks (24'), **in that** at least the cover (21) with the cathode (22) leads into an inverted gas syphon in the uppermost region of said cover, **in that** the electrolytic cell (11) is provided with a control and regulation device for feeding of the electrolyte configured so that the outlet opening of which gas syphon is held in the electrolyte tank (24) completely below the liquid level of the electrolyte, and **in that** the electrolyte tank (24) has a separate gas outlet (26) for each of the gases (29, 30), which gas outlet is arranged at a vertical distance above the liquid level of the electrolyte (28).

2. Electrolytic cell according to claim 1, **characterized in that** the cover (21) has a cylindrical jacket with a conical upper part or a prismatic jacket with a truncated pyramid.

3. Electrolytic cell according to any of claims 1 to 3, **characterized in that** the electrolyte tank (24) forms a dome below each of its outlets (26).

4. Electrolytic cell according to any of the preceding claims, **characterized in that** the cathode (22) and the anode (23) have electrode plates (27) which have a square, regularly hexagonal, or regularly octagonal or circular outline.

5. Electrolytic cell according to any of claims 1 to 4, **characterized in that** the cathode (22) and the anode (23) have electrode plates (27) which are designed in the shape of a truncated cone, a truncated pyramid, or a dome.

## Revendications

1. Cellule d'électrolyse (11), en particulier à utiliser dans un véhicule à moteur, pour la décomposition électrolytique d'eau liquide en hydrogène gazeux (29) et en oxygène (30), comprenant une cuve à électrolyte (24) dans laquelle est placé un électrolyte (28), comprenant une cathode (22) et une anode (23) qui sont disposées chacune dans un moyen de recouvrement (21), **caractérisée en ce que** la cuve à électrolyte (24) est divisée par une cloison (32) en deux cuves à électrolyte partielles (24'), dans la zone de fond étant prévue une communication (33), **en ce que** les deux moyens de recouvrement (21) sont disposés respectivement dans une des cuves à électrolyte partielles (24'), **en ce qu'**au moins le moyen de recouvrement (21) avec la cathode (22) débouche, dans sa zone la plus haute, dans un siphon à gaz inversé, **en ce que** la cellule d'électrolyse (11) comporte pour l'amenée d'électrolyte une unité de commande et de régulation qui est agencée pour maintenir l'ouverture de sortie du siphon à gaz dans la cuve à électrolyte (24) entièrement au-dessous du niveau de liquide de l'électrolyte, et **en ce que** la cuve à électrolyte (24) comporte pour chacun des gaz (29, 30) une sortie de gaz propre (26) qui est disposée à distance verticale au-dessus du niveau de liquide de l'électrolyte (28).

2. Cellule d'électrolyse (11) selon la revendication 1, **caractérisée en ce que** le moyen de recouvrement (21) présente la forme d'une enveloppe cylindrique avec une partie supérieure conique ou d'une enveloppe prismatique avec une pyramide tronquée comme partie supérieure.

3. Cellule d'électrolyse (11) selon une des revendications précédentes, **caractérisée en ce que** la cuve à électrolyte (24) forme un dôme sous chacune de ses sorties (26).

4. Cellule d'électrolyse (11) selon une des revendications précédentes, **caractérisée en ce que** la cathode (22) et l'anode (23) comportent des plaques d'électrode (27) qui présentent un contour carré, hexagonal régulier, octogonal régulier ou circulaire.

5. Cellule d'électrolyse (11) selon une des revendications 1 à 3, **caractérisée en ce que** les plaques d'électrode (27) sont conçues en forme de cône tronqué ou de calotte.
